# EUROPÄISCHE PATENTSCHRIFT

(11) **EP 0 886 762 B1**
(45) Veröffentlichungstag und Bekanntmachung des Hinweises auf die Patenterteilung: **24.10.2001**
(21) Anmeldenummer: 96946198.7
(22) Anmeldetag: 12.12.1996
(51) Int. Cl.: G01D 18/00, G01K 15/00

(54) **VERFAHREN UND VORRICHTUNG ZUR ÜBERPRÜFUNG EINES SENSORS**
METHOD AND DEVICE FOR CHECKING A SENSOR
PROCEDE ET DISPOSITIF POUR CONTROLER UN DETECTEUR

(30) Priorität: 23.02.1996 DE 19606826
(43) Veröffentlichungstag der Anmeldung: 30.12.1998
(73) Patentinhaber: KNORR-BREMSE Systeme für Schienenfahrzeuge GmbH, 80809 München (DE)
(72) Erfinder: BROCH, Walter, D-85259 Wiedenzhausen (DE)
(74) Vertreter: Mattusch, Gundula
(86) Internationale Anmeldenummer: DE9602419
(87) Internationale Veröffentlichungsnummer: WO9731243

(56) Entgegenhaltungen:
- EP-A- 0 423 622
- DE-A- 4 341 118
- US-A- 4 147 431

## Beschreibung

Die Erfindung bezieht sich auf ein Verfahren und eine Vorrichtung zur Überprüfung eines Sensors.

Zur Überprüfung von Sensoren ist es bekannt, den Sensor mit Prüfsignalen wzb. einer elektrischen Prüfspannung zu beaufschlagen und dann den Verlauf des Prüfsignales oder das während des Prüfvorganges erzeugte Sensorausgangssignal zu untersuchen, ob es innerhalb vorbestimmter Grenzwerte liegt. Das Prüfsignal und die vom Sensor gemessene physikalische Größe stehen dabei in keiner direkten Beziehung zueinander, so daß im Regelfall nur Fehler wie Kurzschluß, Leitungsunterbrechung oder ähnliches festgestellt werden können, nicht aber, ob der Sensor in seinem gesamten Meßbereich einwandfrei arbeitet. Da das Prüfsignal an den elektrischen Meßkreis angelegt wird, kann es vorkommen, daß das durch Anlegen des Prüfsignales erzeugte Testsignal (Sensorausgangssignal) nicht von einem Nutzsignal oder einem fehlerhaften Nutzsignal unterschieden werden kann.

Weiter ist es bekannt, einen Sensor dadurch zu überprüfen, daß bei bekannten Zuständen des Meßobjektes, wzb. Stillstand eines Bauteiles, dessen Drehzahl gemessen werden soll, der Sensor abgefragt und sein Ausgangssignal mit dem bekannten Wert verglichen wird. In ähnlicher Weise wird zur Kalibrierung oder Eichung eines Sensors ein Referenzobjekt mit genau bekannten Eigenschaften durch den Sensor gemessen. In beiden Fällen kann die Überprüfung des Sensors nur bei genau bekannten Zuständen des Meßobjektes oder eines Vergleichsnormals durchgeführt werden, nicht aber während des normalen Einsatzes des Meßobjektes, wenn beispielsweise der Sensor in einem Gerät eingebaut ist.

Aufgabe der Erfindung ist es, ein Verfahren und eine Vorrichtung zur Überprüfung eines Sensors zu schaffen, mit denen eine zuverlässige und eindeutige Überprüfung des Sensors auch über dessen gesamten Meßbereich möglich ist. Diese Aufgabe wird für die Vorrichtung mit den Merkmalen des Patentanspruches 1 und für das Verfahren mit den Merkmalen des Patentanspruches 13 gelöst. Vorteilhafte Ausgestaltungen und Weiterbildungen der Erfindung sind den abhängigen Patentansprüchen zu entnehmen.

Die Erfindung arbeitet nach dem Prinzip, einen Sensor aktiv durch einen Testwertgeber mit der zu messenden physikalischen Größe zu beaufschlagen. Sensor und Testwertgeber arbeiten also nach dem gleichen Wirkungsprinzip und sind daher des Typs, der bei Einwirken einer nicht-elektrischen physikalischen Größe ein elektrisches Signal erzeugt und umgekehrt, bei Anlegen eines elektrischen Signales dieselbe nicht-elektrische physikalische Größe erzeugt. Als nicht-elektrische Größen gelten im allgemeinen magnetische, mechanische, thermische, optische und chemische Größen.

Der Testwertgeber erzeugt aufgrund eines elektrischen Prüfsignales die nicht-elektrische physikalische Größe, die auf den zu überprüfenden Sensor einwirkt, der seinerseits dann wieder ein elektrisches Ausgangssignal erzeugt, das im folgenden als Testsignal bezeichnet wird. Das den Testwertgeber erregende Prüfsignal und das während eines Prüfvorganges vom Sensor erzeugte Testsignal stehen in direkter Korrelation zueinander und sind bei Wandlern mit linearer Kennlinie linear voneinander abhängig. Der Proportionalitätsfaktor der linearen Abhängigkeit hängt von dem Wirkungsgrad und dem Grad der Kopplung zwischen Sensor und Testwertgeber bezüglich der nicht-elektrischen physikalischen Größe ab und ist bei vorgegebener Konfiguration als bekannte Konstante anzusetzen. Stimmen das Prüf- und das Testsignal unter Berücksichtigung dieses Faktors überein, so ist dies ein sicherer Beweis für eine einwandfreie Funktion des Sensors, da der Sensor ja mit seinem eigenen Meßprinzip überprüft wird.

Nach einer vorteilhaften Weiterbildung der Erfindung sind der Sensor und der Testwertgeber in einer baulichen Einheit integriert, so daß der Sensor, auch wenn er in ein Gerät eingebaut ist, zu beliebigen Zeitpunkten überprüft werden kann. Von besonderem Vorteil ist auch, daß der elektrische Meßkreis des Sensors und der elektrische Prüfkreis des Testwertgebers vollständig voneinander getrennt sein können, so daß diese Kreise insoweit rückwirkungsfrei arbeiten. Beispielsweise hat ein elektrischer Kurzschluß im Sensor keine Auswirkungen auf den elektrischen Prüfkreis und umgekehrt, so daß die ansonsten bestehende Gefahr eliminiert ist, daß ein defekter elektrischer Kreis Bauelemente des anderen elektrischen Kreises zerstören kann.

In bevorzugten Ausgestaltungen der Erfindung sind der Sensor und der Testwertgeber jeweils elektromagnetisch miteinander gekoppelte elektromagnetische Wandler bzw. Induktionsspulen oder Hall-Sonden oder kraftmäßig miteinander gekoppelte piezoelektrische Kraftaufnehmer oder thermisch miteinander gekoppelte Thermoelemente.

Bei den elektromagnetischen und den piezoelektrischen Wandlern ist es nach einer Weiterbildung der Erfindung auch möglich, den Prüfvorgang dem eigentlichen Meßvorgang des Sensors zu überlagern, d.h. die Überprüfung des Sensors während dessen Meßbetriebes durchzuführen, was beispielsweise dann erfolgen kann, wenn die zu messende physikalische Größe und die vom Testwertgeber erzeugte physikalische Größe sich in ihrer Frequenz unterscheiden, so daß das Ausgangssignal des Sensors das eigentliche Meß- oder Nutzsignal und das Testsignal enthält, die durch Frequenzfilterung voneinander getrennt werden können.

Ein weiterer wichtiger Vorteil der Erfindung liegt darin, daß der Sensor über seinen gesamten Meßbereich geprüft werden kann, indem das Prüfsignal und damit die vom Testwertgeber erzeugte physikalische Größe während eines Prüfvorganges den gesamten Meßbereich des Sensors abtasten.

Im folgenden wird die Erfindung im Zusammenhang mit der Zeichnung ausführlicher erläutert. Es zeigt:
- Fig. 1: ein Prinzipschaltbild einer Vorrichtung zur Überprüfung eines Sensors,
- Fig.2: ein erstes Ausführungsbeispiel mit elektromagnetischem Sensor und elektromagnetischem Testwertgeber;
- Fig. 3: ein Ausführungsbeispiel mit piezoelektrischem Kraft-/Spannungs-Wandler als Sensor und Testwertgeber;
- Fig. 4: ein Ausführungsbeispiel mit Thermoelementen als Sensor und Testwertgeber; und
- Fig. 5: ein Ausführungsbeispiel mit Hall-Sonden als Sensor und Testwertgeber.

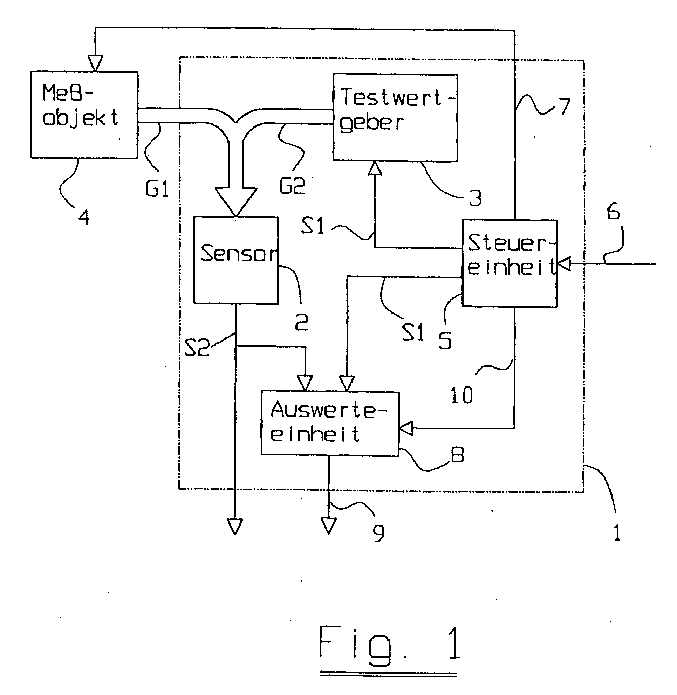

Zunächst wird auf Fig. 1 Bezug genommen. Dort ist eine Vorrichtung 1 zur Überprüfung eines Sensors 2 mittels eines Testwertgebers 3 schematisch dargestellt. Im Meßbetrieb wirkt auf den Sensor 2 eine durch ein Meßobjekt 4 erzeugte erste nicht-elektrische physikalische Größe G1 ein, die von dem Sensor 2 in ein elektrisches Meßsignal umgewandelt wird.

Bei Überprüfung des Sensors 2 erzeugt ein Testwertgeber 3 eine zweite nicht-elektrische physikalische Größe G2 derselben Art wie die erste nicht-elektrische physikalische Größe G1, wobei der Testwertgeber 3 und der Sensor 2 so gekoppelt sind, daß die vom Testwertgeber 3 erzeugte physikalische Größe G2 auf den Sensor 2 wirkt. Der Sensor 2 erzeugt dann ein elektrisches Testsignal S2, das der physikalischen Größe G2 proportional oder je nach Kennlinie bzw. Übertragungsfunktion des Sensors 2 in bekannter Weise abhängig ist.

Der Testwertgeber 3 wird von einer Steuereinheit 5 mit einem Prüfsignal S1 angesteuert, aufgrund dessen die physikalische Größe G2 erzeugt wird. Der Testwertgeber 3 und der Sensor 2 arbeiten also grundsätzlich nach dem gleichen Wirkungsprinzip (z.B. elektromagnetisch, piezoelektrisch), werden hier lediglich in zueinander umgekehrter Betriebsweise eingesetzt. Während der Sensor die nicht-elektrische physikalische Größe G1 in ein elektrisches Signal S2 umwandelt, wandelt der Testwertgeber 3 das elektrische Signal S1 in die nicht-elektrische physikalische Größe G2 um.

Besonders zweckmäßig ist es, wenn der Sensor 2 und der Testwertgeber 3 nach einem umkehrbaren Prinzip arbeiten, also in beiden Richtungen betrieben werden können, d.h. sowohl aus einer elektrischen eine nicht-elektrische physikalische Größe, als auch aus einer nicht-elektrischen physikalischen Größe eine elektrische Größe erzeugen können. In diesem Falle können Sensor und Testwertgeber aus identischen Bauteilen aufgebaut sein, so daß sie gleiche Kennlinien haben. Damit besteht zwischen dem Prüfsignal S1 und dem Testsignal S2 eine lineare Abhängigkeit, die lediglich noch durch den Wirkungsgrad von Testwertgeber und Sensor und den Grad der Kopplung bestimmt ist. Durch geeignete Dimensionierung von Testwertgeber 3 und Sensor 2 können diese Einflüsse von Wirkungsgrad und Kopplungsfaktor derart kompensiert werden, daß bei einwandfrei funktionierendem Sensor das Testsignal S2 exakt gleich dem Prüfsignal S1 ist. Diese beiden Signale werden einer Auswerteeinheit 8 zugeführt, die diese Signale vergleicht und die dann auf einer Leitung 9 ein Fehlersignal ausgibt, wenn der Absolutwert der Differenz der beiden Signale einen festgelegten Schwellwert überschreitet.

Für den Fall, daß systembedingt (vgl. die oben abgehandelten Einflüsse von Wirkungsgrad und Kopplungsfaktor) die Signale S1 und S2 bei einwandfreiem Sensor 2 nicht identisch sind, kann die Auswerteeinheit 8 an eines der beiden Signale S1 oder S2 noch einen Korrekturwert anbringen (z.B. Multiplikation mit einem konstanten Faktor oder Addition eines konstanten Wertes), bevor die beiden Signale verglichen werden. Auch ist es möglich, daß die Steuereinheit 5 an die Auswerteeinheit 8 ein entsprechend korrigiertes Signal übermittelt.

Die Steuereinheit 5 löst den Prüfvorgang bei bestimmten Zuständen des Meßobjektes 4 aus, wzb. bei einem Raddrehzahlsensor eines Kraftfahrzeuges bei Einschalten der Zündung. Ein entsprechendes Aktivierungssignal für die Steuereinheit 5 wird über eine elektrische Leitung 6 zugeführt. Auch ist es möglich, die Überprüfung dann vorzunehmen, wenn bestimmte zustände des Meßobjektes 4 von dem Sensor 2 erfaßt werden. Beim Beispiel eines Raddrehzahlsensors bei Kraftfahrzeugen kann die Prüfung immer dann vorgenommen werden, wenn der Sensor 2 einen Stillstand des Rades meldet. In Fällen eines elektrisch steuerbaren Meßobjektes 4 kann von der Steuereinheit 5 über eine elektrische Leitung 7 die Erzeugung der physikalischen Größe G1 durch das Meßobjekt 4 während der Überprüfung des Sensors 2 unterbunden werden. Schließlich ist es - wie schon erwähnt - bei einigen Anwendungen auch möglich, die Überprüfung des Sensors während des Meßbetriebes durchzuführen. Die Auswerteeinheit enthält dann beispielsweise steuerbare Frequenzfilter für die Signale S1 und S2, wobei diese Frequenzfilter über eine Leitung 10 von der Steuereinheit eingestellt werden.

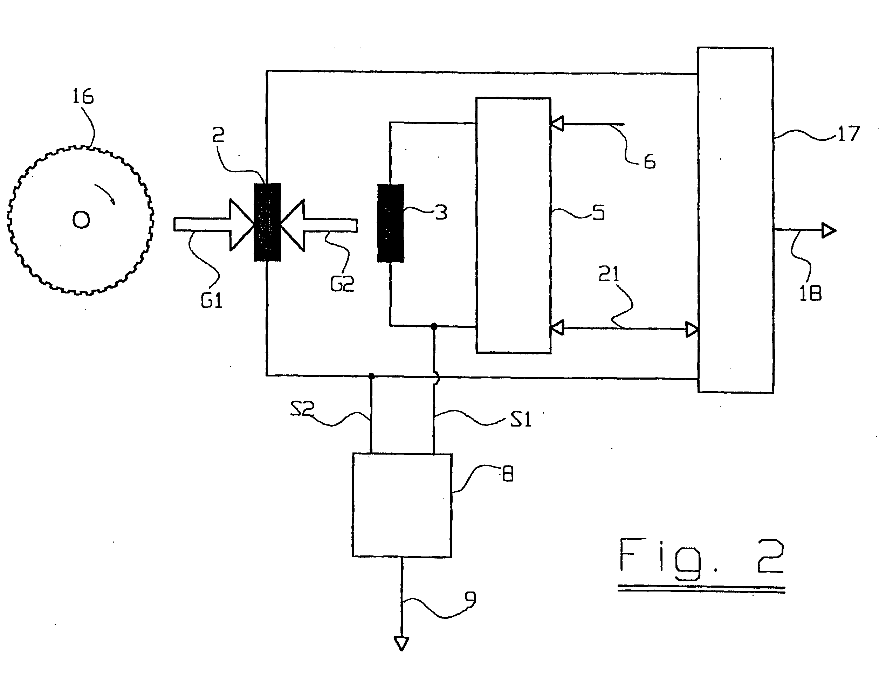

Fig. 2 zeigt ein Ausführungsbeispiel der Erfindung, bei dem der Sensor 2 und der Testwertgeber 3 Induktionsspulen sind, die elektromagnetisch miteinander gekoppelt sind. Beispielsweise können die Induktionsspulen sogar auf einen gemeinsamen Kern gewickelt sein, so daß der Sensor 2 und der Meßwertgeber 3 in einer Baueinheit integriert sind. Die beiden nicht-elektrischen physikalischen Größen G1 und G2 sind damit jeweils Magnetfelder. In diesem Ausführungsbeispiel wird der Sensor 2 als Raddrehzahlgeber eingesetzt, der durch ein Polrad 16 entsprechend dessen Drehzahl modulierte elektromagnetische Schwingungen in elektrische Spannungsimpulse umsetzt, die von einer MeBeinrichtung 17 ausgewertet werden. Ein der Drehzahl entsprechendes analoges oder digitales Signal wird dann über eine Leitung 18 ausgegeben und in hier nicht weiter interessierender Weise verwertet, beispielsweise für eine Blokkierschutzregelung, eine Antriebsschlupfregelung als Tachosignal, etc.. Während einer Überprüfung des Sensors beaufschlagt die Steuereinheit 5 die Induktionsspule des Testwertgebers 3 mit einer elektrischen Spannung, die von dem Testwertgeber 3 in die nicht-elektrische physikalische Größe G2, hier also ein Magnetfeld gewandelt wird, welches in dem Sensor 2 eine elektrische Spannung induziert, die das Testsignal S2 darstellt. Die dem Testwertgeber 3 zugeführte Erregerspannung, d.h. das Prüfsignal S1 wird dann in der Auswerteeinheit 8 mit dem Testsignal S2 verglichen und auf der Leitung 9 wird ein Fehlersignal ausgegeben, wenn die beiden Signale S1 und S2 um ein vorbestimmtes Maß voneinander abweichen.

Die Auswerteeinheit 17 und die Steuereinheit 5 sind über eine elektrische Leitung 21 miteinander verbunden. Damit kann beispielsweise immer dann, wenn das Polrad 16 stillsteht, d.h. wenn das Meßsignal des Sensors 2 fehlt, ein Prüfvorgang ausgelöst werden. Über die Leitung 6 kann ein Prüfvorgang auch bei anderen Betriebszuständen ausgelöst werden, beispielsweise bei Einschalten der Zündung. Da in diesem Falle das Sensorausgangssignal sowohl im Meßals auch im Prüfbetrieb jeweils eine bestimmte Frequenz aufweisen, ist es hier möglich, Messung und Prüfung einander zu überlagern, indem die Frequenz des Prüfsignales S1 gegenüber dem Nutzsignal um einen ausreichenden Abstand verschoben ist. Die Frequenz des Nutzsignales kann der Steuereinheit 5 über die Leitung 21 mitgeteilt werden, worauf dann die Frequenz des Prüfsignales festgelegt wird. Über die Leitung 6 kann aber auch verhindert werden, daß ein Prüfvorgang bei bestimmten Betriebszuständen des Fahrzeuges ausgelöst wird, beispielsweise während eines Bremsvorganges. Schließlich ist es auch möglich, über die Leitung 21 der Auswerteeinheit 17 mitzuteilen, daß im Moment eine Prüfung stattfindet, so daß während dieser Zeit die Ausgabe des eigentlichen Meßsignales auf der Leitung 18 unterbunden wird.

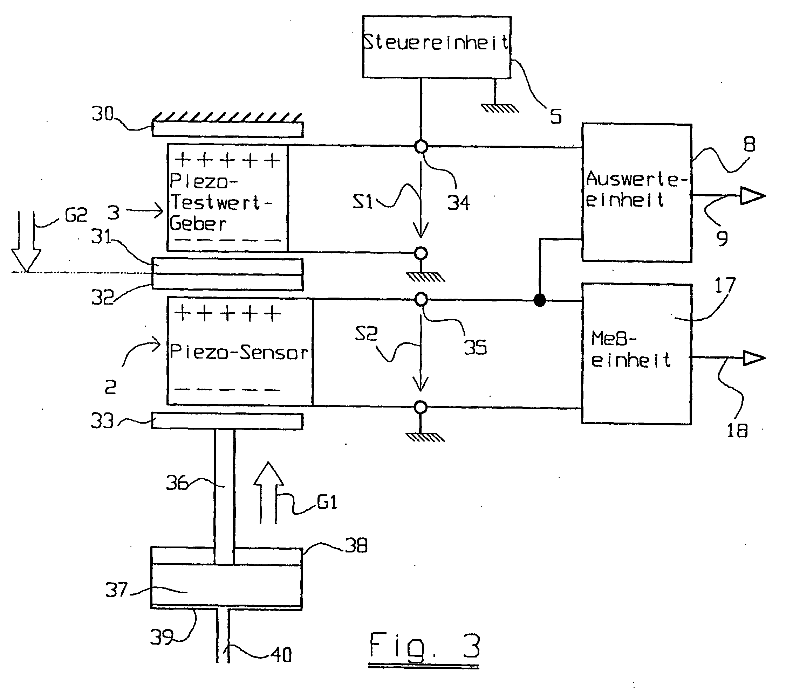

Fig. 3 zeigt ein Ausführungsbeispiel der Erfindung, bei dem der Sensor 2 und der Testwertgeber 3 piezoelektrische Kraft/Spannungs-Wandler sind. Die beiden nicht-elektrischen physikalischen Größen G1 und G2 sind jeweils mechanische Kräfte, das Prüfsignal S1 und das Testsignal S2 elektrische Spannungen.

Der Testwertgeber 3 enthält einen zwischen zwei Platten 30 und 31 angeordneten Piezokristall und der Sensor 2 enthält ebenfalls einen zwischen zwei Platten 32 und 33 angeordneten Piezokristall. Der Sensor und der Testwertgeber sind kraftmäßig miteinander gekoppelt, indem die benachbarten Platten 31 und 32 aneinander anstoßen. Die Platte 30 ist an einem Widerlager abgestützt und die Platte 33 ist der Teil, auf den die zu messende Kraft G1 einwirkt. In Fig. 3 ist eine Anordnung gezeigt, bei der der Sensor als Drucksensor eingesetzt wird. Hierzu ist eine Kolbenstange 36 mit der Platte 33 und einem Kolben 37 gekoppelt. Der Kolben 37 ist in einem Zylinder 38 verschieblich geführt, wobei der Zylinder 38 eine Druckmittelöffnung 40 hat, über die der zu messende Druck eines Gases oder einer Flüssigkeit auf den Kolben 37 einwirkt. Im drucklosen Zustand ist der Kolben 37 an einer Wand 39 des Zylinders abgestützt und kann damit entgegen der Kraft G1 wirkende Kräfte aufnehmen, wzb. die von dem Testwertgeber 3 erzeugte Kraft G2, die der Kraft G1 entgegengesetzt gerichtet ist. Zur Überprüfung des Sensors legt die Steuereinheit 5 an die Anschlußklemme 34 des Testwertgebers 3 die Prüfspannung S1, worauf der Testwertgeber die Kraft G2 erzeugt, die von der Platte 31 auf die Platte 32 und damit auf den Sensor 2 wirkt. Dieser erzeugt in Abhängigkeit von der Größe der Kraft G2 die Testspannung S2, die an den Klemmen 35 abgegriffen und der Auswerteeinheit 8 zugeführt werden kann, wo sie mit der Prüfspannung S1 verglichen wird.

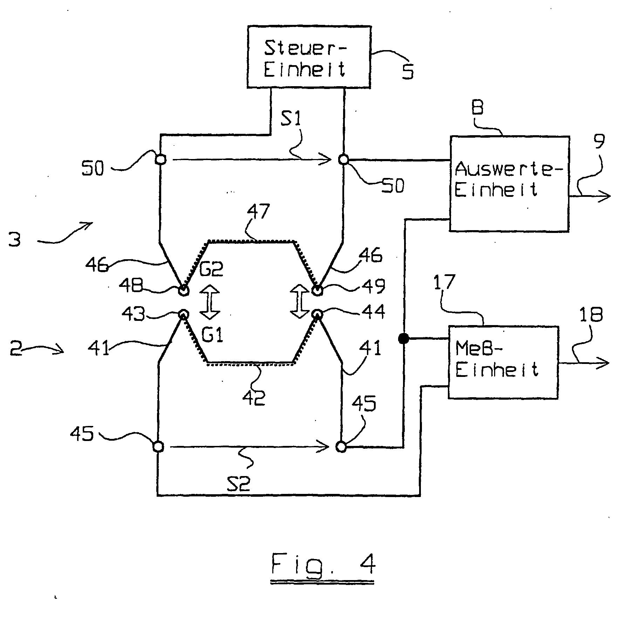

Fig. 4 zeigt eine Variante der Erfindung, bei dem der Sensor 2 und der Testwertgeber 3 thermisch miteinander gekoppelte Thermoelemente sind. Die beiden nicht-elektrischen physikalischen Größen G1 und G2 sind dabei thermische Energien bzw. Temperaturen, während das Prüfsignal S1 und das Testsignal S2 wiederum elektrische Spannungen sind. Der Sensor 2 besteht, wie bei Thermoelementen üblich, aus elektrischen Leitern 41 und 42 aus unterschiedlichem Material, die an zwei Verbindungsstellen 43 und 44 miteinander verbunden sind. Sind diese beiden Verbindungsstellen 43 und 44 auf unterschiedlichen Temperaturen, so erzeugt das Thermoelement eine sog. Thermospannung. Umgekehrt wird ein solches Thermoelement bei Anlegen einer elektrischen Spannung an die Anschlüsse 45 unterschiedliche Temperaturen an den Verbindungsstellen 43 und 44 annehmen.

Der Testwertgeber 3 ist in ähnlicher Weise aus elektrischen Leitern 46 und 47 unterschiedlichen Materials aufgebaut, die wiederum an Verbindungsstellen 48 und 49 miteinander verbunden sind. Diese Verbindungsstellen 48 und 49 des Testwertgebers 3 sind mit den Verbindungsstellen 43 und 44 des Sensors 2 thermisch gekoppelt. Wenn die Steuereinheit 5 an die Anschlußklemmen 50 des Testwertgebers 3 eine Prüfspannung S1 anlegt, so werden die Verbindungsstellen 48 und 49 eine Temperaturdifferenz aufweisen. Diese Temperaturdifferenz wird von den Verbindungsstellen 43 und 44 erfaßt und in die Testspannung S2 umgesetzt. Die Prüfspannung S1 und die Testspannung S2 werden dann wieder der Auswerteeinheit 8 zugeführt. Auch hier wird wieder der Sensor 2 durch einen Testwertgeber gleichen physikalischen Prinzips auf seine Funktion überprüft.

Während des normalen Meßbetriebes, bei dem der Testwertgeber unwirksam geschaltet ist, wird die Thermospannung an den Klemmen 45 der Meßeinheit 17 zugeführt und als Meßwert für die Leitung 18 ausgegeben.

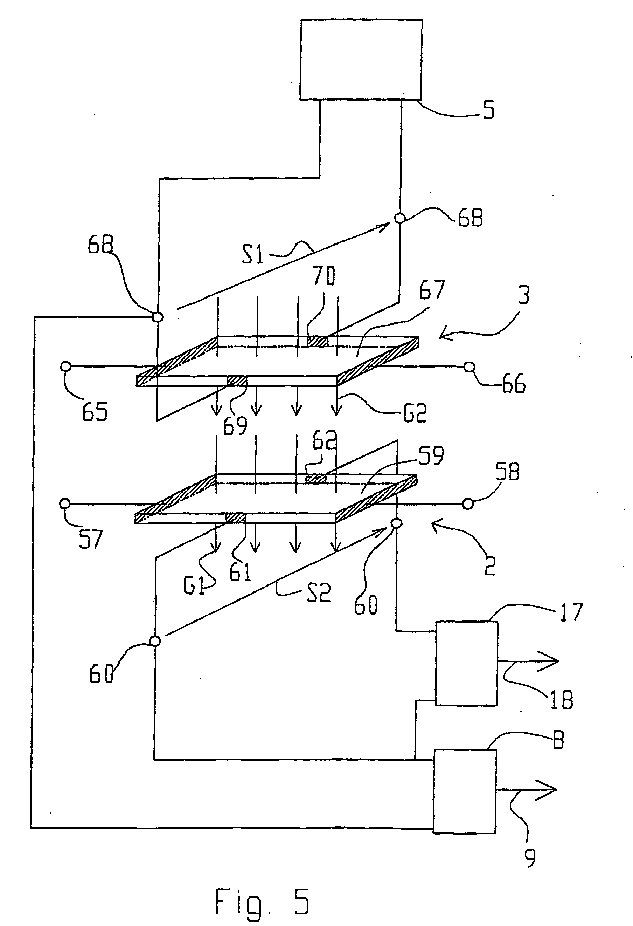

Fig. 5 zeigt ein weiteres Ausführungsbeispiel der vorliegenden Erfindung, bei dem der Sensor 2 und der Testwertgeber 3 Hall-Sonden sind. Die beiden nicht-elektrischen physikalischen Größen G1 und G2 sind jeweils Magnetfelder. Das Prüfsignal S1 und das Testsignal S2 sind wiederum elektrische Spannungen. Die beiden Hall-Sonden sind wiederum magnetisch miteinander gekoppelt, d.h. sie sind parallel zueinander angeordnet, so daß das Magnetfeld der einen Hall-Sonde die andere Hall-Sonde durchdringt und umgekehrt. Der Sensor 2 besteht aus einem stromdurchflossenen Leiterplättchen 59, an dessen gegenüberliegenden Stirnseiten Anschlüsse 57 und 58 für die Einleitung dieses Stromes vorgesehen sind. Wird das Plättchen 59 von einem Magnetfeld G1 durchsetzt, so entsteht an den parallel zur Stromrichtung liegenden Stirnseiten des Plättchens eine Spannung, die über Kontakte 61 und 62 abgegriffen werden kann. Diese Spannung ist proportional der Stärke des Magnetfeldes. Die mit den Kontakten 61 und 62 verbundenen Anschlüsse 60 des Sensors sind wiederum mit der Meßeinheit 17 verbunden.

Der Testsensor 3 ist in gleicher Weise aufgebaut und hat ein Leiterplättchen 67, an zwei gegenüberliegenden Stirnseiten jeweils Anschlüsse 65 und 66 für die Einleitung des Stromes und an den anderen Stirnseiten Kontakte 69 und 70, die mit Anschlüssen 68 verbunden sind, zum Anlegen der Prüfspannung S1 von der Steuereinheit 5. Ist das Plättchen 67 von einem Strom durchflossen, so wird bei Anlegen der Prüfspannung S1 ein Magnetfeld G2 erzeugt, welches aufgrund der Anordnung von Testwertgeber 3 und Sensor 2 auch den Sensor 2 durchflutet und dort wiederum die Prüfspannung S2 erzeugt. Auch hier werden die Prüfspannung S1 und die Testspannung S2 in der Auswerteeinheit 8 miteinander verglichen. Bei diesem Ausführungsbeispiel ist, ähnlich wie beim Ausführungsbeispiel der Fig. 2, ebenfalls möglich, das Meßsignal und das Prüfsignal einander zu überlagern, so daß auch hier während des Messens durch den Sensor 2 auch dessen Überprüfung durchgeführt werden kann.

## Patentansprüche

1. Vorrichtung zur Überprüfung eines Sensors (2) des Typs, der aufgrund einer Einwirkung einer nicht-elektrischen physikalischen Größe ein elektrisches Meßsignal erzeugt, mit einem Testwertgeber (3), der bei Anlegen eines elektrischen Prüfsignals (S1) eine nicht-elektrische physikalische Größe (G2) derselben Art erzeugt, die von dem Sensor (2) gemessen wird und der mit dem Sensor (2) derart gekoppelt ist, daß die vom Testwertgeber (3) erzeugte nicht-elektrische physikalische Größe (G2) auf den Sensor (2) einwirkt, so daß der Sensor (2) ein Testsignal (S2) erzeugt, wobei das Prüfsignal (S1) und das Testsignal (S2) einer Auswerteeinheit (8) zugeführt und miteinander verglichen werden.

2. Vorrichtung nach Anspruch 1, **dadurch gekennzeichnet, daß** der Sensor (2) und der Testwertgeber (3) in einer baulichen Einheit integriert sind.

3. Vorrichtung nach Anspruch 1 oder 2, **dadurch gekennzeichnet, daß** der Testwertgeber (3) elektrisch getrennt von dem Sensor (2) ansteuerbar ist.

4. Vorrichtung nach einem der Ansprüche 1 bis 3, **dadurch gekennzeichnet, daß** eine Steuereinheit (5) vorgesehen ist, die zu vorgegebenen Zeitpunkten das Prüfsignal (S1) erzeugt und damit den Prüfvorgang auslöst.

5. Vorrichtung nach Anspruch 4, **dadurch gekennzeichnet, daß** die Steuereinheit (5) den Prüfvorgang zyklisch wiederholt.

6. Vorrichtung nach einem der Ansprüche 1 bis 5, **dadurch gekennzeichnet, daß** die Auswerteeinheit (8) das Prüfsignal (S1) oder das Testsignal (S2) vor dem Vergleich gemäß einer vorgegebenen Funktion (k) korrigiert, wobei die vorgegebene Funktion den Wirkungsgrad des Sensors (2) und des Testwertgebers (3) und deren Kopplung berücksichtigt.

7. Vorrichtung nach einem der Ansprüche 1 bis 6, **dadurch gekennzeichnet, daß** die Steuereinheit (5) das Prüfsignal (S1) während eines Prüfvorganges verändert, wodurch die nicht-elektrische physikalische Größe (G2) verändert wird und so der Meßbereich des Sensors (2) abgetastet wird.

8. Vorrichtung nach einem der Ansprüche 1 bis 7, **dadurch gekennzeichnet, daß** der Sensor (2) und der Testwertgeber (3) elektromagnetisch miteinander gekoppelte Induktionsspulen sind.

9. Vorrichtung nach einem der Ansprüche 1 bis 7, **dadurch gekennzeichnet, daß** der Sensor (2) und der Testwertgeber (3) jeweils kraftmäßig miteinander gekoppelte, piezoelektrische Kraft-/Spannungs-Wandler sind.

10. Vorrichtung nach einem der Ansprüche 1 bis 7, **dadurch gekennzeichnet, daß** der Sensor (2) und der Testwertgeber (3) jeweils thermisch miteinander gekoppelte Thermoelemente sind.

11. Vorrichtung nach einem der Ansprüche 1 bis 7, **dadurch gekennzeichnet, daß** der Sensor (2) und der Testwertgeber (3) jeweils elektromagnetisch miteinander gekoppelte Hall-Sonden sind.

12. Verfahren zur Überprüfung eines Sensors des Typs, der aufgrund einer Einwirkung einer nicht-elektrischen physikalischen Größe ein elektrisches Meßsignal erzeugt mit folgenden Schritten:
- Anlegen eines Prüfsignals an einen Testwertgeber, der in Abhängigkeit von dem Prüfsignal eine nicht-elektrische physikalische Größe derselben Art erzeugt, die von dem Sensor gemessen wird;
- Koppeln des Testwertgebers und des Sensors hinsichtlich der nicht-elektrischen physikalischen Größen; und
- Vergleichen des an den Testwertgeber angelegten elektrischen Prüfsignals und des von dem Sensor aufgrund der einwirkenden nicht-elektrischen physikalischen Größe erzeugten Testsignals.

13. Verfahren nach Anspruch 12, **dadurch gekennzeichnet, daß** der Prüfvorgang jeweils vor Beginn des Meßbetriebes des Sensors durchgeführt wird.

14. Verfahren nach Anspruch 12 oder 13, **dadurch gekennzeichnet, daß** der Prüfvorgang nur dann durchgeführt wird, wenn die von dem Sensor zu messende physikalische Größe einen vorbestimmten Wert aufweist.

15. Verfahren nach einem der Ansprüche 12 bis 14, **dadurch gekennzeichnet, daß** das elektrische Prüfsignal während eines Prüfvorganges so variiert wird, daß der gesamte Meßbereich des Sensors abgetastet wird.

16. Verfahren nach einem der Ansprüche 12 bis 15, **dadurch gekennzeichnet, daß** das elektrische Prüfsignal und/oder das elektrische Testsignal vor dem Vergleich nach einer vorgegebenen Funktion korrigiert werden.

## Revendications

1. Dispositif de contrôle d'un détecteur (2) du type qui produit un signal de mesure électrique sur la base d'une influence d'une grandeur physique non électrique, comportant un générateur (3) de valeur de test qui, en cas d'application d'un signal (81) de vérification électrique, produit une grandeur (G2) physique non électrique du même genre qui est mesurée par le détecteur (2), et qui est couplé au détecteur (2) de telle manière que la grandeur (G2) physique non électrique produite par le générateur (3) de valeur de test agisse sur le détecteur (2), si bien que le détecteur (2) produit un signal (S2) de test, le signal (S1) de vérification et le signal (S2) de test étant envoyés à une unité (8) d'exploitation et comparés l'un à l'autre.

2. Dispositif suivant la revendication 1, **caractérisé en ce que** le détecteur (2) et le générateur (3) de valeur de test sont intégrés en une unité de construction.

3. Dispositif suivant la revendication 1 ou 2, **caractérisé en ce que** le générateur (3) de valeur de test peut être commandé de façon séparée du détecteur (2) du point de vue électrique.

4. Dispositif suivant l'une des revendications 1 à 3, **caractérisé en ce qu'**il est prévu une unité (5) de commande qui produit le signal (S1) de vérification à des instants prescrits et déclenche ainsi l'opération de vérification.

5. Dispositif suivant la revendication 4, **caractérisé en ce que** l'unité (5) de commande répète cycliquement l'opération de vérification.

6. Dispositif suivant l'une des revendications 1 à 5, **caractérisé en ce que** l'unité (8) d'exploitation corrige le signal (S1) de vérification ou le signal (S2) de test avant la comparaison suivant une fonction (k) prescrite, la fonction prescrite prenant en compte le rendement du détecteur (2) et du générateur (3) de valeur de test et leur couplage.

7. Dispositif suivant l'une des revendications 1 à 6, **caractérisé en ce que** l'unité (5) de commande modifie le signal (S1) de vérification pendant une opération de vérification, ce qui fait que la grandeur (G2) physique non électrique est modifiée et donc que l'intervalle de mesure du détecteur (2) est balayé.

8. Dispositif suivant l'une des revendications 1 à 7, **caractérisé en ce que** le détecteur (2) et le générateur (3) de valeur de test sont des bobines d'induction couplées l'une à l'autre de manière électromagnétique.

9. Dispositif suivant l'une des revendications 1 à 7, **caractérisé en ce que** le détecteur (2) et le générateur (3) de valeur de test sont respectivement des convertisseurs force/tension piézoélectriques, couplés l'un à l'autre du point de vue des forces.

10. Dispositif suivant l'une des revendications 1 à 7, **caractérisé en ce que** le détecteur (2) et le générateur (3) de valeur de test sont respectivement des thermocouples couplés l'un à l'autre du point de vue thermique.

11. Dispositif suivant l'une des revendications 1 à 7, **caractérisé en ce que** le détecteur (2) et le générateur (3) de valeur de test sont respectivement des sondes de Hall couplées l'une à l'autre du point de vue électromagnétique.

12. Procédé de contrôle d'un détecteur du type qui produit un signal de mesure électrique en raison d'une influence d'une grandeur physique non électrique, comportant des étapes suivantes :
- application d'un signal de vérification à un générateur de valeur de test qui produit en fonction du signal de vérification une grandeur physique non électrique du même genre qui est mesurée par le détecteur,
- couplage du générateur de valeur de test et du détecteur du point de vue des grandeurs physiques non électriques ;
- comparaison du signal de vérification électrique appliqué au générateur de valeur de test et du signal de test produit par le détecteur sur la base de la grandeur physique non électrique agissante.

13. Procédé suivant la revendication 12, **caractérisé en ce que** l'opération de vérification est effectuée chaque fois avant le début du fonctionnement de mesure du détecteur.

14. Procédé suivant la revendication 12 ou 13, **caractérisé en ce que** l'opération de vérification n'est effectuée que si la grandeur physique à mesurer par le détecteur a une valeur prédéterminée.

15. Procédé suivant l'une des revendications 12 à 14, **caractérisé en ce que** l'on fait varier le signal de vérification électrique pendant une opération de vérification de manière à balayer tout l'intervalle de mesure du détecteur.

16. Procédé suivant l'une des revendications 12 à 15, **caractérisé en ce que** le signal de vérification électrique et/ou le signal de test électrique sont corrigés avant la comparaison suivant une fonction prescrite.

## Claims

1. Device for checking a sensor (2) of the type which on the basis of an action of a non-electrical physical variable generates an electrical measurement signal, having a test-value generator (3) which upon application of an electrical checking signal (S1) generates a non-electrical physical variable (G2) of the same kind that is measured by the sensor (2) and which test-value generator (3) is coupled to the sensor (2) in such a way that the non-electrical physical variable (G2) that is generated by the test-value generator (3) acts on the sensor (2) so that the sensor (2) generates a test signal (S2), wherein the checking signal (S1) and the test signal (S2) are fed to an evaluating unit (8) and compared with each other.

2. Device according to claim 1, **characterized in that** the sensor (2) and the test-value generator (3) are integrated in a structural unit.

3. Device according to claim 1 or 2, **characterized in that** the test-value generator (3) can be activated electrically separately from the sensor (2).

4. Device according to one of claims 1 to 3, **characterized in that** a control unit (5) is provided that generates the checking signal (S1) at predetermined instants and thereby triggers the checking process.

5. Device according to claim 4, **characterized in that** the control unit (5) cyclically repeats the checking process.

6. Device according to one of claims 1 to 5, **characterized in that** the evaluating unit (8) corrects the checking signal (S1) or the test signal (S2) before the comparison in accordance with a predetermined function (k), with the predetermined function taking account of the efficiency of the sensor (2) and of the test-value generator (3) and their coupling.

7. Device according to one of claims 1 to 6, **characterized in that** the control unit (5) varies the checking signal (S1) during a checking process, whereby the non-electrical physical variable (G2) is varied and thus the measuring range of the sensor (2) is sampled.

8. Device according to one of claims 1 to 7, **characterized in that** the sensor (2) and the test-value generator (3) are induction coils that are coupled together electromagnetically.

9. Device according to one of claims 1 to 7, **characterized in that** the sensor (2) and the test-value generator (3) are in each case piezoelectric force/voltage converters that are coupled together with respect to force.

10. Device according to one of claims 1 to 7, **characterized in that** the sensor (2) and the test-value generator (3) are in each case thermocouples that are coupled together thermally.

11. Device according to one of claims 1 to 7, **characterized in that** the sensor (2) and the test-value generator (3) are in each case Hall probes that are coupled together electromagnetically.

12. Method for checking a sensor of the type which on the basis of an action of a non-electrical physical variable generates an electrical measurement signal, the method having the following steps of:
- applying a checking signal to a test-value generator, which as a function of the checking signal generates a non-electrical physical variable of the same kind that is measured by the sensor;
- coupling the test-value generator and the sensor with regard to the non-electrical physical variables; and
- comparing the electrical checking signal, which is applied to the test-value generator, with the test signal, which is generated by the sensor on the basis of the non-electrical physical variable acting thereon.

13. Method according to claim 12, **characterized in that** the checking process is carried out in each case before the start of the measuring operation of the sensor.

14. Method according to claim 12 or 13, **characterized in that** the checking process is only carried out if the physical variable that is to be measured by the sensor has a predetermined value.

15. Method according to one of claims 12 to 14, **characterized in that** the electrical checking signal is varied during a checking process in such a way that the whole measuring range of the sensor is sampled.

16. Method according to one of claims 12 to 15, **characterized in that** the electrical checking signal and/or the electrical test signal are corrected before the comparison in accordance with a predetermined function.
